# EUROPÄISCHE PATENTSCHRIFT

(11) **EP 0 764 479 B1**
(45) Veröffentlichungstag und Bekanntmachung des Hinweises auf die Patenterteilung: **30.06.1999**
(21) Anmeldenummer: 95114919.4
(22) Anmeldetag: 22.09.1995
(51) Int. Cl.: B08B 9/46, B67D 1/07, G01N 21/90, G01N 21/64

(54) **Verfahren zur Reinigung von Gebinden**
Method for cleaning containers
Procédé de nettoyage des récipients

(43) Veröffentlichungstag der Anmeldung: 26.03.1997
(73) Patentinhaber: GEA Till GmbH & Co., D-65830 Kriftel (DE)
(72) Erfinder: Till, Volker, D-65719 Hofheim am Taunus (DE)
(74) Vertreter: KEIL & SCHAAFHAUSEN

(56) Entgegenhaltungen:
- DE-A- 2 738 571
- DE-A- 4 025 624
- DE-A- 4 234 466

## Beschreibung

Die Erfindung betrifft ein Verfahren zur Reinigung von Gebinden, bspw. Fässern oder Kegs, wobei das Gebinde vorgespült, mit Chemikalien gereinigt und anschließend mit Nachspülflüssigkeit ausgespült wird.

In vielen Industriezweigen werden Mehrwegbehälter verwendet, die nach Entleerung und Rückführung in den Abfüllbetrieb zunächst gereinigt werden, bevor sie erneut befüllt werden können. In diesem Zusammenhang ist insbesondere die Getränkeindustrie zu nennen, die einen besonders hohen Anteil derartiger Behälter aufweist. So werden bspw. Bierfässer oder -kegs an Gaststätten geliefert und nach Entleerung wieder zur Brauerei zurückgebracht. Dort werden sie gereinigt, wobei üblicherweise zunächst die Reste entleert werden und dann ein Vorspritzen mit Wasser, eine Umwälzreinigung mit Chemikalien und anschließend ein Nachspritzen mit Frischwasser erfolgt. Anschließend werden die Gebinde mit Dampf sterilisiert und erneut befüllt. Die Qualität und Haltbarkeit des eingefüllten Getränks kann jedoch durch nach der Abfüllung im Gebinde vorhandene Mikroorganismen geschädigt sein. Diese Mikroorganismen können zum einen über das Produkt selbst in das Gebinde gelangen, was durch Pasteurisation verhindert werden soll. Eine andere Infektionsquelle stellt jedoch das Gebinde selbst dar. Ist dieses nicht ausreichend gereinigt worden, kann es Keime übertragen. Dies versucht man durch Sterilisation, vorzugsweise mit Sattdampf, zu verhindern. Wird jedoch über mehrere Umläufe anstelle einer vollständigen Reinigung lediglich eine Dampfsterilisation durchgeführt, so baut sich innerhalb des Gebindes ein schwammartig aufgebauter, zunächst steriler Schmutzhaufen auf. Ab einer gewissen Größe ist dieser Schmutzhaufen nicht mehr sterilisierbar, da die schwammartig angeordneten Poren und Blasen eine Isolationsschicht um den zentralen Kern bilden und darin versteckte Bakterien vor der Abtötung durch die während des Sterilisationsvorgangs herrschenden hohen Temperaturen schützen.

Zur Überprüfung der Haltbarkeit des Produkts werden regelmäßig nach der Reinigung, der Sterilisation und der Abfüllung Produktproben entnommen. Diese Proben werden auf Nährböden verteilt und in der Regel mehrere Tage im Labor gebrütet. Danach wird auf den Nährböden gezählt, ob sich Zellkolonien entwickeln konnten, um dadurch Rückschlüsse auf die Qualität des Reinigungs-, Sterilisations- und/oder Pasteurisationsvorgangs zu ziehen. Zum Zeitpunkt der Vorlage der Resultate, die auf eine möglicherweise inadäquate Reinigung hinweisen, ist es jedoch bereits zu spät. Die Produktion mehrerer Tage ist möglicherweise gänzlich oder zumindest teilweise kontaminiert.

Aus der DE 42 34 466 A1 ist ein Verfahren zum Bestimmen der Konzentration eines einen Tracer enthaltenden Wirkstoffs in Wirkstofflösungen, die insbesondere zur Reinigung oder Desinfektion von Behältern in der lebensmittelverarbeitenden Industrie eingesetzt werden, bekannt, wobei die Konzentration des Wirkstoffes in der Lösung über eine Bestimmung ihres Tracer-Gehaltes gemessen wird. Dadurch soll die Bestimmung der Wirkstoffkonzentration und ggf. eine kontinuierliche Nachdosierung ermöglicht werden. Als Tracer wird ein Fluoreszenzfarbstoff eingesetzt, wobei die Fluoreszenzfarbstoffkonzentration in der Lösung lichtoptisch gemessen und entsprechend aus den erhaltenen Meßwerten die Konzentration des Wirkstoffes bestimmt wird. Abgesehen davon, daß mit diesem Verfahren nicht überprüft wird, ob die Wirkstofflösung frei von Reinigungsmitteln ist, bedingt die vorbekannte Konzentrationsüberprüfung, daß der Tracer gleichzeitig mit dem Wirkstoff in die Wirkstofflösung eingebracht wird. Nur so läßt sich von dem Tracer-Gehalt auf die Wirkstoffkonzentration rückschließen.

Aus der DE 27 38 571 A1 ist ein Prüfsystem zum Erfassen einer wässrigen Laugenlösung im Boden eines Behälters bekannt, bei dem mit Hilfe einer Infraroterfassung überprüft wird, ob in einem Behälter, bspw. einer leeren Getränkeflasche eine Alkalilaugenlösung enthalten ist. Auf diese Weise kann aber der Erfolg einer Reinigungsspülung auf der Basis der Untersuchung der ablaufenden Nachspülflüssigkeit nicht überprüft werden.

Aus der DE 40 25 624 A1 ist ein Verfahren zur Reinigung eines Bierdruckapparates bekannt, wobei Wasser und Reinigungsmittel in einem Behältnis gemischt werden, ein an einen Behälter für speisefähige Flüssigkeit anschließbarer Zapfkopf über ein Kupplungselement mit dem Behälter verbunden wird, und das Gemisch aus Wasser und Reinigungsmittel durch den Bierdruckapparat geführt und mittels einer mit einem ablesbaren Speicherelement versehenen Erfassungseinheit zeitlich registriert wird. Auch bei dieser zeitgestützten Überprüfung kann nicht sichergestellt werden, daß die ablaufende Nachspülflüssigkeit frei von Verunreinigungen ist.

Aufgabe der Erfindung ist es daher, eine schnellere Aussage über die Qualität des Reinigungsprozesses zu ermöglichen und dadurch die Produktsicherheit zu erhöhen.

Diese Aufgabe wird mit der Erfindung im wesentlichen durch die Merkmale der Ansprüche 1 und 9 gelöst.

Erfindungsgemäß wird ein Indikator in das Gebinde eingebracht und wenigstens die im letzten Teil der Nachspülphase ablaufende Nachspülflüssigkeit auf das Vorhandensein des Indikators überprüft wird. Dem Indikator wird so die Möglichkeit gegeben, sich in möglicherweise in dem Gebinde vorhandenen Schmutzresten und/oder ebenso gefährlich wirkenden Spalten des Gebindes festzusetzen. Bei den glatten Metall-, Glas- und/oder Kunststoffwandungen oder -oberflächen der üblichen Gebinde ist ein derartiges Einnisten des Indikators nicht möglich, so daß der Indikator bei korrekter Reinigung von den glatten Wandungen des Gebindes abgewaschen und aus dem Behälter herausgeschwemmt wird. Wird am Ende des Nachspülvorgangs kein Indikator mehr in der ablaufenden Nachspülflüssigkeit festgestellt, so zeigt dies an, daß die Reinigung erfolgreich durchgeführt wurde. Sind aber Spalten und/oder Verschmutzungen im Gebinde vorhanden, so sammeln diese den Indikator und geben ihn während der Gesamtdauer der Nachspritzung kontinuierlich an das zugeführte Nachspritzwasser ab. Der Indikator kann damit auch am Ende der Nachspritzung im Ablaufwasser nachgewiesen werden und als Hinweis auf eine unvollständig durchgeführte Reinigung benutzt werden. Zur Überprüfung der ablaufenden Nachspülflüssigkeit werden in Anpassung an den verwendeten Indikator UV-Licht-Detektoren, andere Licht-Detektoren, Feld-Zählmechanismen oder dergleichen verwendet. Über derartige Detektoren ist der Indikator innerhalb von Sekundenbruchteilen im Wasser erkennbar, so daß ein unzureichend gereinigtes Faß sofort erkannt wird.

Bei einer bevorzugten Ausführungsform der Erfindung wird der Indikator am Anfang oder während eines der ersten Schritte des Reinigungsvorgangs in das Gebinde eingebracht.

Hierbei besteht jedoch die Gefahr, daß bei der chemischen Reinigung, die üblicherweise bei Temperaturen zwischen 85 und 95° Celsius durchgeführt wird, der Indikator durch die Chemikalien und/oder die Temperatur in seinen Eigenschaften derart verändert wird, daß er anschließend durch den Detektor nicht mehr feststellbar ist. Die Untersuchung der während der Nachspülphase ablaufenden Nachspülflüssigkeit würde somit keine brauchbaren Ergebnisse liefern. Gemäß einer weiteren bevorzugten Ausgestaltung der Erfindung wird daher vorgeschlagen, daß der Indikator erst nach einer die Indikationswirkung beeinträchtigenden Phase des Reinigungsvorgangs, insbesondere nach der chemischen Reinigung, in das Gebinde eingebracht wird.

In Weiterbildung dieses Erfindungsgedankens ist vorgesehen, daß das Gebinde im Anschluß an die chemische Reinigung kurz bspw. mit kaltem Wasser ausgespült wird, um die Konzentration der Chemikalien und/oder die Temperatur so weit zu reduzieren, daß sie die Eigenschaften des anschließend in das Gebinde einzubringenden Indikator nicht mehr verändern.

Besonders einfach und wirksam wird der Indikator durch Durchspülen des Gebindes mit einer mit dem Indikator angereicherten Trägerflüssigkeit, bspw. Wasser, in das Gebinde eingebracht.

Vorzugsweise wird als Indikator ein Bakterium verwendet, da sich diese auf besonders einfache Weise nachweisen lassen.

Um eine Schädigung des Produkts durch nach der Reinigung in dem Gebinde verbleibende Bakterien zu verhindern, sollte die Auswahl der verwendeten Bakterien an das jeweils zu verarbeitende Produkt angepaßt werden. So wird erfindungsgemäß vorgeschlagen, daß bei der Abfüllung von Bier aerobe Bakterien als Indikator verwendet werden, da diese Bier nicht schädigen können.

In Weiterbildung der Erfindung werden als Indikator in UV-Licht detektierbare Bakterien verwendet. Derartige Bakterien sind aus dem Bereich der Wasserentkeimung bekannt. Sie werden dort dem Trinkwasser zugesetzt und müssen durch UV-Entkeimung abgetötet werden. Werden nach der UV-Entkeimung noch UV-Lichtreaktionen im Wasser gemessen, bedeutet dies, daß die UV-Entkeimungslampe nicht mehr korrekt arbeitet und ausgetauscht werden muß. Das Bakterium selbst ist für Menschen unschädlich.

Gemäß einer weiteren Ausgestaltung der Erfindung erfolgt die Überprüfung der ablaufenden Nachspülflüssigkeit durch Messung von Adenosintriphosphat (ATP) als Indikator einer unvollständigen Reinigung. Diese Chemikalie ist in allen Organismen enthalten, so daß sie einen eindeutigen Hinweis auf das Vorhandensein von organischen Verschmutzungen sowie eines ggf. gesondert zugegebenen bakteriellen Indikators liefert. Die ATP-Analysezeit beträgt zur Zeit allerdings noch ca. 2 Minuten, ist also länger als die Nachspritzzeit, die üblicherweise zwischen 5 und maximal 20 Sekunden liegt. Im Vergleich zu der bisher mehrere Tage dauernden Analyse des Reinigungsvorgangs ist diese Zeitverzögerung jedoch vernachlässigbar.

Wird der Indikator in der ablaufenden Nachspülflüssigkeit ggf. in einer einen festgelegten Grenzwert überschreitenden Menge oder Konzentration festgestellt, so wird gemäß einer besonders bevorzugten Ausgestaltung der Erfindung ein Signal an die Steuerung der Reinigungsanlage abgegeben, aufgrund dessen das offensichtlich unvollständig gereinigte Gebinde unter elektronischer Markierung des Ausstoßgrundes aus dem Produktionsprozeß ausgeschleust werden kann.

Erfindungsgemäß erfolgt im Anschluß an das Nachspülen eine Sterilisation des Gebindes, um möglicherweise in diesem verbliebene Bakterien sicher abzutöten und eine Beeinflussung von Produkt oder Konsumenten zu verhindern.

Weiterbildungen, Vorteile und Anwendungsmöglichkeiten der Erfindung ergeben sich auch aus der nachfolgenden Beschreibung von Ausführungsbeispielen.

Die Reinigung von Mehrweggebinden erfolgt erfindungsgemäß unter Anwendung der bisher üblichen Schritte des Resteentleerens, Vorspritzens mit einer Vorspritzflüssigkeit, bspw. Wasser, einer Umwälzreinigung mit Chemikalien, eines Nachspritzens mit Frischwasser und einer anschließenden Dampfsterilisation. Bei Bierfässern oder -kegs wird die Nachspritzung üblicherweise mit warmen Wasser vorgenommen, um nach der heißen Chemikalienreinigung das Gebinde nicht unnötig abzukühlen, da es anschließend bei der Sterilisation ohnehin wieder aufgeheizt werden muß.

Gemäß einer ersten Ausführungsform der Erfindung wird am Anfang oder während der ersten Schritte des Reinigungsprozesses das Gebinde mit einer Trägerflüssigkeit, bspw. Wasser, durchgespült, die mit einem Indikator angereichert ist. Als Indikator wird hierbei ein Organismus, bspw. ein Bakterium, verwendet, das in UV-Licht detektiert werden kann. Insbesondere bei der Reinigung von Gebinden für Bier werden vorzugsweise aerobe Bakterien verwendet, da diese das Bier nicht schädigen. Der anfänglich in hoher Konzentration in das Gebinde eingegebene Indikator kann sich an die zu diesem Zeitpunkt noch garantiert in dem Gebinde vorhandene Verschmutzung anlagern. Das Gebinde wird anschließend mit dem obenbeschriebenen Reinigungszyklus gereinigt, wobei durch Kontrolle des ablaufenden Nachspritzwassers festgestellt werden kann, ob sich nach der chemischen Reinigung noch der anfänglich eingebrachte Indikatorstoff oder- Organismus im Auslauf des Nachspritzwassers aus dem Gebinde befindet. Zweckmäßigerweise ist dabei der Detektor, der ein UV-Detektor, ein anderer Licht-Detektor oder Feld-Zählmechanismus oder dgl. sein kann, in der Ablaufleitung enthalten. Ist der in das Gebinde eingebrachte Indikator nicht zusammen mit der ansonsten vorhandenen Verschmutzung ausgewaschen worden, so ist die Reinigung mit Sicherheit nur unvollständig durchgeführt worden. Der Indikator wird von der Detektorsonde erkannt und ein entsprechendes Signal wird an die Steuerung der Maschine weitergegeben, so daß das Gebinde unter elektronischer Markierung des Ausstoßgrundes aus dem Produktionsfluß ausgeschleust wird.

Bei einer zweiten Ausführungsform der Erfindung wird der Indikator erst nach der chemischen Reinigung in das Gebinde eingebracht. Dies ist insbesondere dann zu empfehlen, wenn die Eigenschaften des Indikators durch die bei der chemischen Reinigung herrschenden hohen Temperaturen von 85 bis 95° Celsius oder durch die Chemikalie derart verändert werden, daß der Indikator anschließend durch den Detektor nicht mehr feststellbar ist. Um die Konzentration der Chemikalien nach der chemischen Reinigung soweit zu reduzieren, daß der Indikator nicht mehr nachteilig beeinflußt wird, wird das Gebinde nach der chemischen Reinigung kurz mit Frischwasser ausgespült. Anschließend wird das Gebinde mit der mit dem Indikatorstoff und/oder -organismus angereicherten Trägerflüssigkeit, bspw. Wasser, durchspült, so daß sich der Indikator an möglicherweise noch in dem Gebinde vorhandenen Schmutzresten und/oder in Spalten innerhalb des Gebindes festsetzen kann. Sind keine Verschmutzungen und Spalten in dem Gebinde vorhanden, wird der Indikator während der anschließenden Nachspülphase von den glatten Wandungen des Gebindes abgewaschen und aus dem Behälter herausgeschwemmt. Der Detektor wird somit am Ende der Nachspritzung keinen Indikator mehr in der ablaufenden Nachspülflüssigkeit feststellen und das Gebinde mit "ok" beurteilen können. Sind aber Spalten und/oder Verschmutzungen in dem Gebinde vorhanden, so sammeln diese den Indikator und geben ihn während der Gesamtdauer der Nachspritzung kontinuierlich an das zugeführte Nachspritzwasser ab. Der Indikator kann damit auch am Ende der Nachspritzung im Ablaufwasser nachgewiesen werden, so daß das unzureichend gereinigte Gebinde über die Maschinensteuerung rechtzeitig aus der Produktionslinie ausgeschleust und vom weiteren Behandlungsvorgang ausgeschlossen werden kann.

Gemäß einer weiteren Ausgestaltung der Erfindung erfolgt die Überprüfung der ablaufenden Nachspülflüssigkeit durch Messung von Adenosintriphosphat (ATP), einer Chemikalie, die in allen Organismen enthalten ist. Diese Messung kann damit sowohl dann angewandt werden, wenn ein Organismus, bspw. ein Bakterium, wie oben beschrieben zugegeben wird, als auch selbstständig ohne gesonderte Zugabe eines Indikators. Durch die ATP-Messung können nämlich sämtliche durch Organismen gebildete Verschmutzungen in der Nachspülflüssigkeit festgestellt werden.

Mit der Erfindung läßt sich die Qualität des Reinigungsprozesses direkt und im wesentlichen gleichzeitig während der Reinigung eines Gebindes überprüfen. Die Gefahr, daß kontaminiertes Produkt zum Verbraucher gelangt, wird somit wesentlich vermindert.

## Patentansprüche

1. Verfahren zur Reinigung von Gebinden, bspw. Fässern oder Kegs, wobei das Gebinde vorgespült, mit Chemikalien gereinigt und anschließend mit Nachspülflüssigkeit ausgespült wird, **dadurch gekennzeichnet,** daß ein aus Organismen bestehender Indikator in das Gebinde eingebracht wird, und daß wenigstens die im letzten Teil der Nachspülphase ablaufende Nachspülflüssigkeit auf das Vorhandensein von Adenosintriphosphat (ATP) oder mit Hilfe von UV-Licht-Detektoren, andere Licht-Detektoren, Feld-Zählmechanismen oder dgl. auf das Vorhandensein des Indikators überprüft wird.

2. Verfahren nach Anspruch 1, **dadurch gekennzeichnet,** daß der Indikator am Anfang oder während der ersten Schritte des Reinigungsvorgangs in das Gebinde eingebracht wird.

3. Verfahren nach Anspruch 1, **dadurch gekennzeichnet,** daß der Indikator erst nach einer die Indikationswirkung beeinträchtigenden Phase des Reinigungsvorgangs, insbesondere nach der chemischen Reinigung, in das Gebinde eingebracht wird.

4. Verfahren nach Anspruch 3, **dadurch gekennzeichnet,** daß das Gebinde nach der chemischen Reinigung bspw. mit Wasser kurz ausgespült wird.

5. Verfahren nach einem der Ansprüche 1 bis 4, **dadurch gekennzeichnet,** daß der Indikator durch Durchspülen des Gebindes mit einer mit dem Indikator angereicherten Trägerflüssigkeit, bspw. Wasser, in das Gebinde eingebracht wird.

6. Verfahren nach einem der Ansprüche 1 bis 5, **dadurch gekennzeichnet,** daß als Indikator ein Bakterium verwendet wird.

7. Verfahren nach Anspruch 6, insbesondere zur Reinigung von Gebinden für Bier, **dadurch gekennzeichnet,** daß als Indikator aerobe Bakterien verwendet werden.

8. Verfahren nach Anspruch 6 oder 7, **dadurch gekennzeichnet,** daß als Indikator in UV-Licht detektierbare Bakterien verwendet werden.

9. Verfahren zur Reinigung von Gebinden, bspw. Fässern oder Kegs, wobei das Gebinde vorgespült, mit Chemikalien gereinigt und anschließend mit Nachspülflüssigkeit ausgespült wird, **dadurch gekennzeichnet,** daß wenigstens die im letzten Teil der Nachspülphase ablaufende Nachspülflüssigkeit auf das Vorhandensein von Adenosintriphosphat (ATP) als Indikator einer durch Organismen gebildeten Verschmutzung überprüft wird.

10. Verfahren nach einem der Ansprüche 1 bis 9, **dadurch gekennzeichnet,** daß ein Signal an die Steuerung der Reinigungsanlage abgegeben wird, wenn der Indikator in der ablaufenden Nachspülflüssigkeit ggf. in einer einen festgelegten Grenzwert überschreitenden Menge/Konzentration festgestellt wird.

11. Verfahren nach einem der Ansprüche 1 bis 10, **dadurch gekennzeichnet,** daß nach dem Nachspülen eine Sterilisation des Gebindes erfolgt.

## Claims

1. A method of cleaning containers, for example barrels or kegs, the container being pre-rinsed, cleaned with chemicals and then rinsed out with a post-rinse fluid, characterized in that an indicator comprising organisms is introduced into the container and in that at least the post-rinse fluid draining off in the final part of the post-rinsing phase is tested for the presence of adenosine triphosphate (ATP) or is tested for the presence of the indicator using UV light detectors, other light detectors, field-counting devices or the like.

2. A method according to Claim 1, characterized in that the indicator is introduced into the container at the start or during the first steps of the cleaning procedure.

3. A method according to Claim 1, characterized in that the indicator is only introduced into the container after a phase of the cleaning procedure which impairs the indicating effect, in particular after the chemical cleaning.

4. A method according to Claim 3, characterized in that the container is rinsed out briefly, for example with water, after the chemical cleaning.

5. A method according to one of Claims 1 to 4, characterized in that the indicator is introduced into the container by rinsing the container thoroughly with a carrier liquid, for example water, to which the indicator has been added.

6. A method according to one of Claims 1 to 5, characterized in that a bacterium is used as the indicator.

7. A method according to Claim 6, in particular for cleaning containers for beer, characterized in that aerobic bacteria are used as the indicator.

8. A method according to Claim 6 or 7, characterized in that bacteria which may be detected in UV light are used as the indicator.

9. A method for cleaning containers, for example barrels or kegs, the container being pre-rinsed, cleaned with chemicals and then rinsed out with post-rinse fluid, characterized in that at least the post-rinse fluid draining off in the final part of the post-rinsing phase is tested for the presence of adenosine triphosphate (ATP) as an indicator of contamination caused by organisms.

10. A method according to one of Claims 1 to 9, characterized in that a signal is transmitted to the control system of the cleaning plant if the indicator is found in the post-rinse fluid which is draining off or is found to be in a quantity/at a concentration which exceeds a set limit value.

11. A method according to one of Claims 1 to 10, characterized in that the container is sterilised after post-rinsing.

## Revendications

1. Procédé de nettoyage de récipients, tels que des fûts ou des tonnelets, selon lequel le récipient est prérincé, nettoyé avec des produits chimiques puis rincé avec un liquide de rinçage, **caractérisé en ce qu**'un indicateur composé d'organismes est introduit dans le récipient et en ce que la présence d'adénosine triphosphate (A.T.P.) ou la présence de l'indicateur est contrôlée au moins dans le liquide de rinçage s'écoulant lors de la dernière partie de la phase de rinçage, la présence de l'indicateur étant contrôlée à l'aide de détecteurs de lumière UV, d'autres détecteurs de lumière, de mécanismes de comptage de champ ou un équivalent.

2. Procédé selon la revendication 1, **caractérisé en ce que** l'indicateur est introduit dans le récipient au début ou au cours de la première étape de l'opération de nettoyage.

3. Procédé selon la revendication 1, **caractérisé en ce que** l'indicateur n'est introduit dans le récipient qu'après une phase de l'opération de nettoyage nuisible pour l'effet d'indication, en particulier après le nettoyage chimique.

4. Procédé selon la revendication 3, **caractérisé en ce que** le récipient est rapidement rincé par exemple avec de l'eau après le nettoyage chimique.

5. Procédé selon l'une des revendications 1 à 4, **caractérisé en ce que** l'indicateur est introduit dans le récipient en rinçant celui-ci avec un véhicule enrichi avec l'indicateur.

6. Procédé selon l'une des revendications 1 à 5, **caractérisé en ce qu**'une bactérie est utilisée comme indicateur.

7. Procédé selon la revendication 6, en particulier pour le nettoyage de récipients pour la bière, **caractérisé en ce que** des bactéries aérobies sont utilisées comme indicateur.

8. Procédé selon la revendication 6 ou 7, **caractérisé en ce que** des bactéries détectables en lumière UV sont utilisées comme indicateur.

9. Procédé de nettoyage de récipients, tels que des fûts ou des tonnelets, selon lequel le récipient est prérincé, nettoyé avec des produits chimiques puis rincé avec un liquide de rinçage, **caractérisé en ce que** la présence d'adénosine triphosphate (A.T.P.) utilisée pour indiquer une contamination par des organismes est contrôlée au moins dans le liquide de rinçage s'écoulant lors de la dernière partie de la phase de rinçage.

10. Procédé selon l'une des revendications 1 à 9, **caractérisé en ce qu**'un signal est transmis à la commande de l'installation de nettoyage lorsque l'indicateur est détecté dans le liquide de rinçage s'écoulant, le cas échéant dans une quantité/concentration dépassant une valeur limite fixée.

11. Procédé selon l'une des revendications 1 à 10, **caractérisé en ce qu**'une stérilisation du récipient est effectuée après le rinçage.
